# EUROPÄISCHE PATENTANMELDUNG

(11) **EP 1 662 226 A1**
(43) Veröffentlichungstag der Anmeldung: **31.05.2006**
(21) Anmeldenummer: 05022305.6
(22) Anmeldetag: 13.10.2005
(51) Int. Cl.: G01B 11/10, A24C 5/34

(54) **Messen des Durchmessers von stabförmigen Artikeln der Tabak verabeitenden Industrie**

(30) Priorität: 25.11.2004 DE 102004057092
(71) Anmelder: Hauni Maschinenbau AG, 21033 Hamburg (DE)
(72) Erfinder: Lämmel, Max, 21493 Schwarzenbek (DE)
(74) Vertreter: Grebner, Christian Georg Rudolf

(57) **Zusammenfassung**

Die Erfindung betrifft eine Einrichtung zum Erfassen des Durchmessers und/oder der Querschnittsform von stabförmigen Artikeln (10) der Tabak verarbeitenden Industrie.

Die Einrichtung wird dadurch weitergebildet, dass mehrere, insbesondere mehr als drei, Lichtquellen (12) zum Aussenden von, insbesondere linienförmigem, Licht (14) auf den Artikel (10) und zu jeder Lichtquelle (12) jeweils ein Sensor (17) zum Empfang von von der Artikeloberfläche gestreutem Licht (19) vorgesehen sind und dass eine Auswerteeinheit (21) zur Auswertung der Messsignale der Sensoren (17) vorgesehen ist.

## Beschreibung

Die Erfindung betrifft eine Einrichtung zum Erfassen des Durchmessers und/oder der Querschnittsform von stabförmigen Artikeln der Tabak verarbeitenden Industrie. Ferner betrifft die Erfindung eine Maschine der Tabak verarbeitenden Industrie, insbesondere Zigarettenherstellungsmaschine oder Filteransetzmaschine.

Unter "stabförmigen Gegenständen der Tabak verarbeitenden Industrie" sind hier im vorliegenden Zusammenhang Zigaretten, Filterstäbe, Filterzigaretten und ähnliche Gegenstände vorgegebenen Durchmessers zu verstehen. In erster Linie befasst sich die vorliegende Erfindung mit der Durchmessermessung an strangförmigen Artikeln, wie Zigaretten- und insbesondere Filterstränge, die kontinuierlich gefördert werden. Wenn im Folgenden der Einfachheit halber nur noch von strangförmigen Artikeln die Rede ist, so sollen stabförmige Artikel der oben genannten Art jedenfalls nicht ausgeschlossen sein, unabhängig davon, in welchem Produktionsschritt sich diese Gegenstände befinden. Ferner umfasst der Begriff "stabförmiger Gegenstand" auch einen Endlosstrang, der in einem bestimmten Produktionsschritt als ganzes oder als bereits zerteiltes Strangstück, beispielsweise zur Herstellung der zuvor erwähnten Rauchartikel, vorliegt.

Bei der Herstellung von Zigaretten und Filtern ist der Durchmesser ein wesentliches Qualitätsmerkmal, das bei der Herstellung zu überwachen ist. Dabei werden gewöhnlich die stabförmigen Gegenstände in Längsrichtung, also in Richtung ihrer Längsachse, kontinuierlich oder diskontinuierlich durch eine Messanordnung gefördert. Die Schwierigkeit genauer Messungen des Durchmessers liegt darin, dass die stabförmigen Artikel oft "unrund" sind, also die Querschnitte senkrecht zu den Längsachsen mehr oder weniger von der Kreisform abweichen.

Bei der Herstellung von im Strangverfahren gefertigten Produkten, wie z.B. Filterstäben, sollen die Durchmesserschwankungen so gering wie möglich gehalten werden. Abweichungen bezüglich des Durchmessers eines Filterstrangs sind insofern besonders ungünstig, als bei aus Filterstopfen und Zigaretten von zusammengesetzten Mundstückzigaretten Stopfen und Zigaretten den gleichen Durchmesser haben müssen, damit ihre Vereinigung, beispielsweise durch ein Verbindungsblättchen, erfolgen kann, ohne dass Lücken zwischen dem Blättchen und dem Stopfen oder der Zigarette verbleiben, durch welche Nebenluft eindringen und die Raucheigenschaften verschlechtern könnte.

Aus DE 34 14 247 A1 (entspricht US 4,543,816) ist eine Einrichtung durch Durchmessermessung von Filtersträngen mittels eines pneumatischen Prüfsystems bekannt.

Ferner ist in EP 1 445 576 A1 eine Messvorrichtung zum Messen des Durchmessers eines stabförmigen Gegenstandes der Tabak verarbeitenden Industrie beschrieben, wobei der stabförmige Artikel mittels eines Lichtschnitts vermessen wird. Um genügend Durchmesserpunkte zu erhalten, muss die Laserlichtquelle um den stabförmigen Artikel verschwenkt werden.

Ausgehend von diesem Stand der Technik ist es Aufgabe der vorliegenden Erfindung, auf einfache und schnelle Weise den Durchmesser von stabförmigen Artikeln der Tabak verarbeitenden Industrie zu messen.

Die Aufgabe wird bei einer Einrichtung zum Erfassen des Durchmessers und/oder der Querschnittsform von stabförmigen Artikeln der Tabak verarbeitenden Industrie dadurch gelöst, dass mehrere, insbesondere mehr als drei, Lichtquellen zum Aussenden von, insbesondere linienförmigem, Licht auf den Artikel und zu jeder Lichtquelle jeweils ein Sensor zum Empfang von von der Artikeloberfläche gestreutem Licht vorgesehen sind und dass eine Auswerteeinheit zur Auswertung der Messsignale der Sensoren vorgesehen ist.

Die Erfindung beruht auf dem Gedanken, dass der stabförmige Artikel gleichzeitig von allen Lichtquellen an einer Stelle beleuchtet wird, so dass Licht von der Oberfläche des Artikels an der beleuchteten Stelle gestreut und das gestreute Licht von Sensoren erfasst wird. Hierbei ist einer Lichtquelle jeweils ein Sensor zugeordnet, so dass das Profil einer von einer Lichtquelle beleuchteten Teilfläche der gesamten Umfangsfläche des Artikels von einem Sensor erfasst wird. Um den Durchmesser an einer vorbestimmten Stelle des Artikels gleichzeitig und ohne Schattenbereiche erfassen zu können, ist es notwendig, dass mehrere Lichtquellen den Artikel an dieser Stelle beleuchten. Dadurch wird eine schnelle und sichere Erfassung des Durchmessers des Artikels gewährleistet. Ferner sind mehrere Lichtquellen notwendig, um den Artikel vollständig, d.h. ohne Abschattungen oder dergleichen vollständig zu erfassen.

Gemäß einer zweckmäßigen Ausgestaltung wird vorgeschlagen, dass die Lichtquellen derart angeordnet und/oder ausgebildet sind, dass der Artikel in seinem Umfang, vorzugsweise an einer vorbestimmten Stelle, im Wesentlichen vollständig erfasst wird.

Ferner ist es von Vorteil, wenn die Sensoren zur Erfassung eines Höhenprofils des Artikels ausgebildet sind.

Dazu ist vorgesehen, dass die Sensoren jeweils als positionssensitive Detektoren, insbesondere als so genannte PSD-Arrays, ausgebildet sind. Unter der Bezeichnung "PSD" sind positionsempfindliche Detektoren bzw. Sensoren bekannt, die neben einer einfachen Bausweise auch sehr zuverlässig arbeiten. Darüber hinaus zeichnen sind positionssensitive Detektoren durch geringe Messtoleranzen und kurze Messzeiten aus. Derartige Sensoren finden häufig als Abstandssensoren Einsatz, die nach dem Prinzip der Triangulation arbeiten. Hierbei wird ein gut kollimierter Analysestrahl, z. B. Laserstrahl, auf eine Probenfläche gesendet, so dass das gestreute Licht von der beleuchteten Oberfläche über eine Optik auf den positionsempfindlichen Detektor (PSD - position sensitive detector) gelangt. Der Ort des auftretenden Streulichts ist abhängig von der Entfernung der Objektoberfläche. Die positionsempfindlichen Detektoren können die Koordinaten des Lichtpunktes auf dem Detektor eindeutig in elektrische Signale umwandeln, so dass die Entfernung zum Messobjekt schnell und genau bestimmt werden kann.

Um ein Höhenprofil eines Objektes leicht und schnell erfassen zu können, werden so genannte PSD-Arrays eingesetzt, so dass eine ganze Höhenprofillinie in einem einzigen Messvorgang erfasst wird.

Dazu ist vorteilhafterweise vorgesehen, dass die Lichtquellen linienförmig das Licht aussenden, so dass an einer vorbestimmten Stelle das Höhenprofil des von der Lichtquelle teilbeleuchteten Artikels gestreut wird und von einem PSD-Array erfasst wird.

Eine verbesserte Anordnung ergibt sich dadurch, wenn die ausgesendeten Lichtstrahlen der Lichtquellen in einer Ebene liegen. Eine derartige Ebene ist beispielsweise durch eine senkrechte Ebene zur Längsachse des Artikels gebildet.

Des Weiteren ist es günstig, wenn die Lichtquellen und/oder die Sensoren sternförmig, insbesondere gleichmäßig, und/oder symmetrisch um den Artikel angeordnet sind.

Außerdem ist es bevorzugt, wenn die Auswerteeinheit die Form und/oder die Dimension des Durchmessers des stabförmigen Artikels ermittelt.

Ferner wird die Aufgabe gelöst durch eine Maschine der Tabak verarbeitenden Industrie, insbesondere Zigarettenherstellungsmaschine oder Filteransetzmaschine, die mit einer erfindungsgemäßen voranstehend beschriebenen Einrichtung ausgestattet ist. Zur Vermeidung von Wiederholungen wird auf die voranstehenden Ausführungen ausdrücklich verwiesen.

Die Erfindung wird nachstehend und ohne Beschränkung des allgemeinen Erfindungsgedankens anhand der Zeichnungen näher beschrieben. Bezüglich aller im Text nicht näher erläuterten erfindungsgemäßen Einzelheiten wird auf die Zeichnungen verwiesen.

Es zeigen:
- Fig. 1: schematisch eine Anordnung zur Erfassung eines Höhenprofils eines teilbeleuchteten Rauchartikelstrangs;
- Fig. 2: eine weitere Anordnung mit einer Detaildarstellung eines PSD-Arrays und
- Fig. 3: eine Messanordnung zur Messung eines Durchmessers eines Rauchartikelstrangs.

In den folgenden Figuren sind jeweils gleiche oder gleichartige Elemente bzw. entsprechende Teile mit denselben Bezugsziffern versehen, wobei von einer entsprechenden erneuten Vorstellung abgesehen wird.

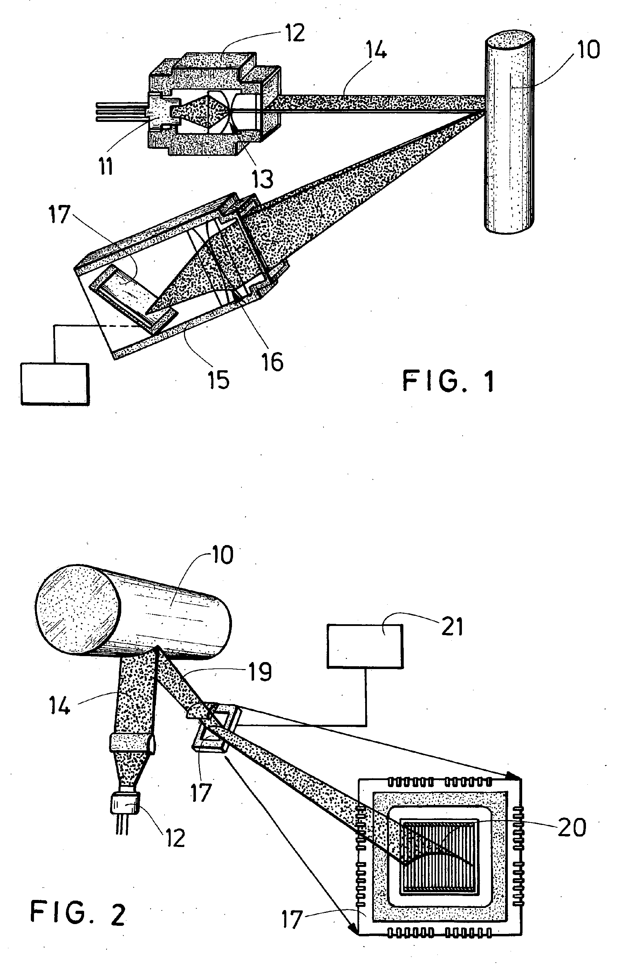

Fig. 1 zeigt schematisch eine optische Anordnung zur Messung eines Teilprofils des Durchmessers eines strangförmigen Rauchartikels 10. Der Rauchartikel 10 kann sowohl ruhend als auch während der Messung bewegt, d. h. gefördert, werden. Mittels eines Senders 12 mit einer Laserdiode 11 und einer Zylinderoptik 13 wird ein kollimierter Lichtstrahl 14 mit einer vorbestimmten Breite auf den Rauchartikel 10 ausgesendet.

Das auf der beleuchteten Stelle des Rauchartikels 10 gestreute Licht wird in einem Winkelbereich mittels eines Empfängers 15 empfangen, der mit einer abbildenden Optik 16 und einem positionssensitiven Detektor-Array (PSD-Array) ausgebildet ist, empfangen. Mittels des PSD-Arrays 17 wird das Profil der vom Lichtstrahl 14 erfassten Teilfläche des Rauchartikels 10 als Höhenprofil erfasst. Das PSD-Array 17 ist über eine Verbindung mit einer Auswerteeinheit 21 verbunden, wodurch die Rundheit bzw. Unrundheit der beleuchteten Teilfläche des Rauchartikels 10 ermittelt wird.

In Fig. 2 ist aus einer anderen perspektivischen Ansicht die Erfassung des Profils der teilbeleuchteten Flächen des Rauchartikels 10 dargestellt. Mittels des Lichtsenders 12 wird ein kollimierter Lichtstrahl 14 auf die Oberfläche des Rauchartikelstrangs 10 gesendet. Von dort gelangt das gestreute Licht (Bezugszeichen 19) auf das PSD-Array 17.

Im rechten unteren Teil der Fig. 2 ist schematisch das PSD-Array 17 vergrößert dargestellt, wobei entsprechend der Form des Rauchartikels 10 an der beleuchteten Stelle ein Höhenprofil 20 registriert wird. Die Orte des auftreffenden, gestreuten Lichts sind abhängig von der Entfernung vom rundlichen Rauchartikelstrang 10. Hierdurch kann die Entfernung des Strangs schnell und genau bestimmt werden.

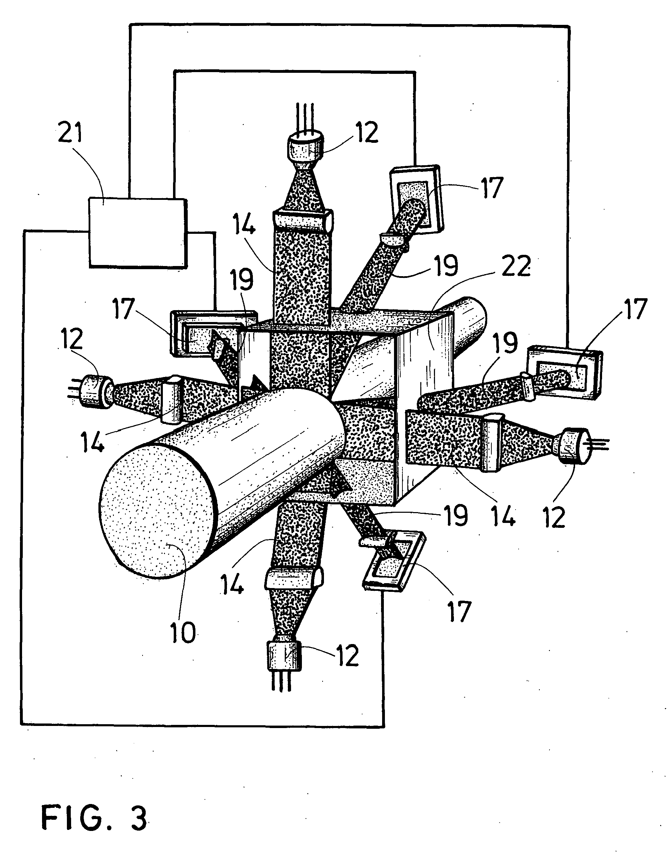

In Fig. 3 ist schematisch eine Einrichtung zur Erfassung bzw. Messung des Durchmessers des strangförmigen Rauchartikels 10 dargestellt. Der Rauchartikel 10 wird längsaxial durch einen vierwandigen Glaskörper 22 gefördert. Um den Glaskörper 22 bzw. den Rauchartikel 10 herum sind sternförmig bzw. kreuzförmig vier Sender 12 zur Erzeugung von kollimiertem Licht angeordnet, wobei die ausgesandten Lichtstrahlen 14 in einer senkrechten Ebene zur Längsachse bzw. zur Förderrichtung des Rauchartikels 10 liegen.

Die ausgesendeten Lichtstrahlen 14 treffen auf die Oberfläche des Artikels 10, so dass von jeweils einem Lichtstrahl 14 ein Quadrant des Rauchartikels 10 beleuchtet wird. Zu jeder der Lichtquellen 12 sind in dem jeweiligen Quadranten PSD-Arrays 17 zur Registrierung des gestreuten Lichts angeordnet, so dass ein genaues Profil der Oberfläche des Rauchartikels 10 von der Auswerteinheit 21 ermittelt wird. Aufgrund des Messergebnisses kann eine schnelle und exakte Durchmessermessung des Rauchartikels erfolgen, wobei der Durchmesser an einer vorbestimmten Stelle ermittelt wird. Darüber hinaus kann neben der Messung des Durchmessers mit dieser Anordnung auch die Form des Strangs und auch eine Klebnaht eines Umhüllungsstreifens am Rauchartikelstrang überprüft werden.

### Bezugszeichenliste

- 10: Rauchartikel
- 11: Laserdiode
- 12: Sender
- 13: Zylinderoptik
- 14: Lichtstrahl
- 15: Empfänger
- 16: abbildende Optik
- 17: PSD-Array
- 19: gestreutes Licht
- 20: Höhenprofil
- 21: Auswerteeinheit
- 22: Glaskörper

## Patentansprüche

1. Einrichtung zum Erfassen des Durchmessers und/oder der Querschnittsform von stabförmigen Artikeln (10) der Tabak verarbeitenden Industrie, **dadurch gekennzeichnet, dass** mehrere, insbesondere mehr als drei, Lichtquellen (12) zum Aussenden von, insbesondere linienförmigem, Licht (14) auf den Artikel (10) und zu jeder Lichtquelle (12) jeweils ein Sensor (17) zum Empfang von von der Artikeloberfläche gestreutem Licht (19) vorgesehen sind und dass eine Auswerteeinheit (21) zur Auswertung der Messsignale der Sensoren vorgesehen ist.

2. Einrichtung nach Anspruch 1, **dadurch gekennzeichnet, dass** die Lichtquellen (12) derart angeordnet und/oder ausgebildet sind, dass der Artikel (10) in seinem Umfang im Wesentlichen vollständig erfasst wird.

3. Einrichtung nach Anspruch 1 oder 2, **dadurch gekennzeichnet, dass** die Sensoren (17) zur Erfassung eines Höhenprofils (20) des Artikels (10) ausgebildet sind.

4. Einrichtung nach Anspruch 3, **dadurch gekennzeichnet, dass** die Sensoren (17) jeweils als positionssensitive Sensoren (17), insbesondere als so genannte PSD-Arrays (17), ausgebildet sind.

5. Einrichtung nach einem der Ansprüche 1 bis 4, **dadurch gekennzeichnet, dass** die Lichtquellen (12) linienförmig das Licht (14) aussenden.

6. Einrichtung nach einem oder mehreren der Ansprüche 1 bis 5, **dadurch gekennzeichnet, dass** die ausgesendeten Lichtstrahlen (14) in einer Ebene liegen.

7. Einrichtung nach einem oder mehreren der Ansprüche 1 bis 6, **dadurch gekennzeichnet, dass** die Lichtquellen (12) als Laserlichtquellen (12) ausgebildet sind.

8. Einrichtung nach einem oder mehreren der Ansprüche 1 bis 7, **dadurch gekennzeichnet, dass** die Lichtquellen (12) und/oder die Sensoren (17) sternförmig, insbesondere gleichmäßig, und/oder symmetrisch um den Artikel (20) angeordnet sind.

9. Einrichtung nach einem oder mehreren der Ansprüche 1 bis 8, **dadurch gekennzeichnet, dass** die Auswerteeinheit (21) die Form und/oder die Dimension des Durchmessers des Artikels (10) ermittelt.

10. Maschine der Tabak verarbeitenden Industrie, insbesondere Zigarettenstrangmaschine oder Filteransetzmaschine, mit einer Einrichtung nach einem oder mehreren der Ansprüche 1 bis 9.
